Europäisches Patentamt

**European Patent Office**

**Office européen des brevets**

(11) Veröffentlichungsnummer: **0 092 505**
A1

(12) EUROPÄISCHE PATENTANMELDUNG

(21) Anmeldenummer: 83710017.1

(22) Anmeldetag: 09.04.83

(51) Int. Cl.³: **G 01 D 5/26,** G 01 L 1/24,
G 02 F 1/29

(30) Priorität: 21.04.82 SE 8202484

(43) Veröffentlichungstag der Anmeldung: 26.10.83
Patentblatt 83/43

(84) Benannte Vertragsstaaten: CH DE FR GB LI

(71) Anmelder: **ASEA AB, S-721 83 Västeras (SE)**

(72) Erfinder: **Brogardh, Torgny, Prof., Platverksgatan 140,
S-724 74 Västeras (SE)**
Erfinder: **Hök, Bertil, Dr.phil., Sportfiskargatan 53,
S-723 48 Västeras (SE)**
Erfinder: **Ovrén, Christer, Dr. Ing., Vilddjursvägen 9,
S-722 43 Västeras (SE)**

(74) Vertreter: **Boecker, Joachim, Dr.-Ing.,
Rathenauplatz 2-8, D-6000 Frankfurt a.M. 1 (DE)**

(54) Faseroptischer Geber.

㊿ Faseroptischer Geber mit mindestens einer optischen Faser (10), die Licht zum Sensor des Gebers hin- und von diesem wegleitet, wobei der Sensor eine Struktur mit lumineszierendem Material enthält. Gemäss der Erfindung hat der Sensor eine monolithische Struktur mit mindestens zwei lumineszierenden Materialvolumina (14, 15) mit unterschiedlichen Lumineszenzspektren. Ferner gehört zum Sensor ein elastischer Teil (13), der die genannten Materialvolumina trägt. Die optische Faser (10) und der elastisch gelagerte Sensorteil (11) sind so im Verhältnis zueinander angeordnet, dass das der Faser zugeführte Lumineszenzlicht von der Durchbiegung des elastischen Teils abhängt.

Patentanwalt und Rechtsanwalt
Dr.-Ing. Dipl.-Ing. Joachim B o e c k e r

6 Frankfurt/Main 1, 5.4.1983
Rathenauplatz 2-8
Telefon: (0611) *282355
Telex: 4189066 itax d

0092505

B/th 21 257 PE

A S E A   Aktiebolag, Västeras/Schweden

## Faseroptischer Geber

Die Erfindung betrifft einen faseroptischen Geber gemäß dem Oberbegriff des Anspruches 1.

Faseroptische Meßanordnungen zum Messen physikalischer Größen wie z.B. einer Lage, einer Geschwindigkeit, einer Beschleunigung, einer Kraft, eines Druckes, einer Dehnung, einer Temperatur usw. sind bereits bekannt. Diese Anordnungen bestehen im wesentlichen aus einer Elektronikeinheit und einem Geber (Meßgeber), wobei diese beiden Teile über mindestens eine optische Faser verbunden sind, die Licht von der Elektronikeinheit zum Geber und umgekehrt leitet. Die Elektronikeinheit ist mit Detektoren für das vom Geber gelieferte Licht und mit einer Signalverarbeitungsanordnung versehen. Der Geber enthält einen Sensor, zu dem ein Organ mit mindestens einem lumineszierenden Material gehört, wobei die Lage dieses Organs relativ zum Ende der optischen Faser von der zu messenden Größe abhängt. Dadurch wird ein von der Meßgröße abhängiges Ausgangssignal des Gebers gewonnen. (Siehe DE-OS 30 47 343). In dieser Druckschrift wird beschrieben, wie ein Lagegeber dadurch geschaffen werden kann, daß zwei Körper, die Fotolumineszenzlicht mit unterschiedlichen Spektren emittieren, im Verhältnis zu der Endfläche der optischen Faser unter dem Einfluß der Meßgröße verschoben werden

/2

- 2 -

können. Die Wellenlängenanteile des Lichtes, das dabei von den genannten Körpern in die Faser gestrahlt wird, ist somit von der Lage dieser Körper im Verhältnis zur Faser abhängig, und diese Lage kann in der Elektronikeinheit durch Aufschlüsselung der Wellenlängenanteile des empfangenen Lichtes mittels eines geeigneten Detektorprinzips bestimmt werden.

Der Erfindung liegt die Aufgabe zugrunde, einen faseroptischen Geber der eingangs genannten Art weiterzuentwickeln, und zwar insbesondere in der Weise, daß der Sensor in seinem Aufbau relativ einfach und robust ist.

Zur Lösung dieser Aufgabe wird ein faseroptischer Meßgeber gemäß dem Oberbegriff des Anspruches 1 vorgeschlagen, der erfindungsgemäß die im kennzeichnenden Teil des Anspruches 1 genannten Merkmale hat.

Vorteilhafte Weiterbildungen der Erfindung sind in den Unteransprüchen genannt.

Gemäß der Erfindung ist also in der monolitischen Struktur des Sensors ein Sensorteil mit räumlich variierenden Lumineszenzeigenschaften vorhanden, wobei dieser Sensorteil auf einem elastischen Teil angeordnet ist oder integraler Bestandteil dieses elastischen Teils ist. Die Durchbiegungen des elastischen Teils bestimmen die Wellenlängenanteile des Lichtes, das vom Sensor in die optische Faser geleitet wird. Der Sensor ist also monolithisch, d.h. aus einem einzigen Stück hergestellt. Diese Herstellung kann beispielsweise durch Epitaxialverfahren erfolgen, die mit selektiven Ätzverfahren kombiniert werden.

Anhand der Figuren soll die Erfindung näher erläutert werden. Es zeigen

/3

- 3 -

Fig. 1 und 2    ein Ausführungsbeispiel für den Sensor eines Gebers gemäß der Erfindung,

Fig. 3 und 4    ein zweites Ausführungsbeispiel für einen Sensor eines Gebers gemäß der Erfindung,

Fig. 5    ein drittes Ausführungsbeispiel für den Sensor eines Gebers gemäß der Erfindung.

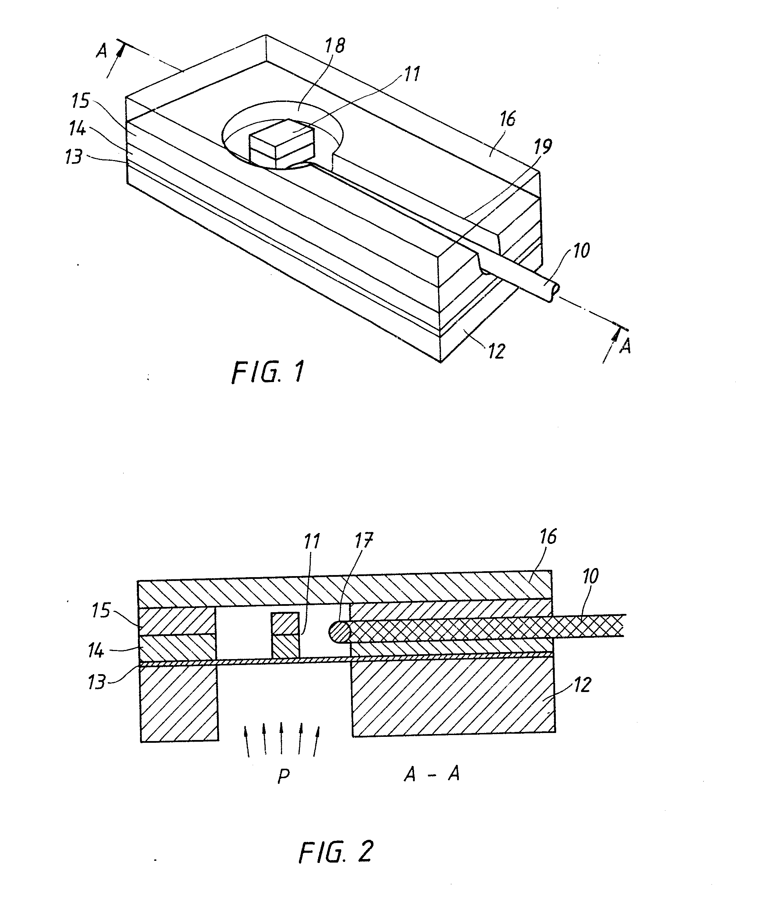

Bei der in den Figuren 1 und 2 gezeigten Ausführungsform des Sensors für einen Geber nach der Erfindung bezeichnet 10 einen Wellenleiter, z.B. eine optische Faser, der Licht zu einem beweglichen Körper 11 hin und von diesem weg leitet. 12 ist ein Substrat, z.B. GaAs; die sich darauf befindliche Schicht 13 besteht aus $Al_yGa_{1-y}As$, die Schicht 14 aus $Al_{x1}Ga_{1-x1}As$, die Schicht 15 aus $Al_{x2}Ga_{1-x2}As$ und 16 ist eine Deckmaterialschicht, die aus Glas bestehen kann. Dieses Deckglas ist für die Funktion des Sensors nicht erforderlich und wird daher in der folgenden Beschreibung nicht weiter erwähnt. Die genannte monolithische Struktur kann nach Standardverfahren hergestellt werden, die für die Herstellung von optoelektronischen Bauteilen verwendet werden, wie z.B. LPE, VPE, MOCVD oder MBE. Durch Ätzen wird ein kreisförmiges Loch 18 in die Struktur geformt. Während des Ätzens wird ein Teil des Materials in der Mitte des Lochs gegen Wegätzen geschützt. Auf gleiche Weise wird Material von der anderen Seite der Struktur her weggeätzt. Durch Ätzen oder auf andere Weise wird auch eine Nut 19 zur Aufnahme der optischen Faser 10 hergestellt. Die optische Faser kann mit einer Linse 17 versehen sein (siehe Figur 2).

Die Arbeitsweise des Sensors geht aus Figur 2 hervor. Unter der Wirkung einer äußeren Kraft, z.B. eines Druckes P, kann der bewegliche Körper 11 des Sensors (der also aus zwei Materialien 14 und 15 mit verschiedenen Lumineszenzspektren besteht) im Verhältnis zu der optischen Faser 10 verschoben werden, wobei sich das Spektrum des

/4

in die Faser geleiteten Lichtes ändert. Infolge der Elastizität der aus der Schicht 13 bestehenden Membran kehrt der Körper 11 in seine ursprüngliche Lage zurück, wenn der Druck P verschwindet.

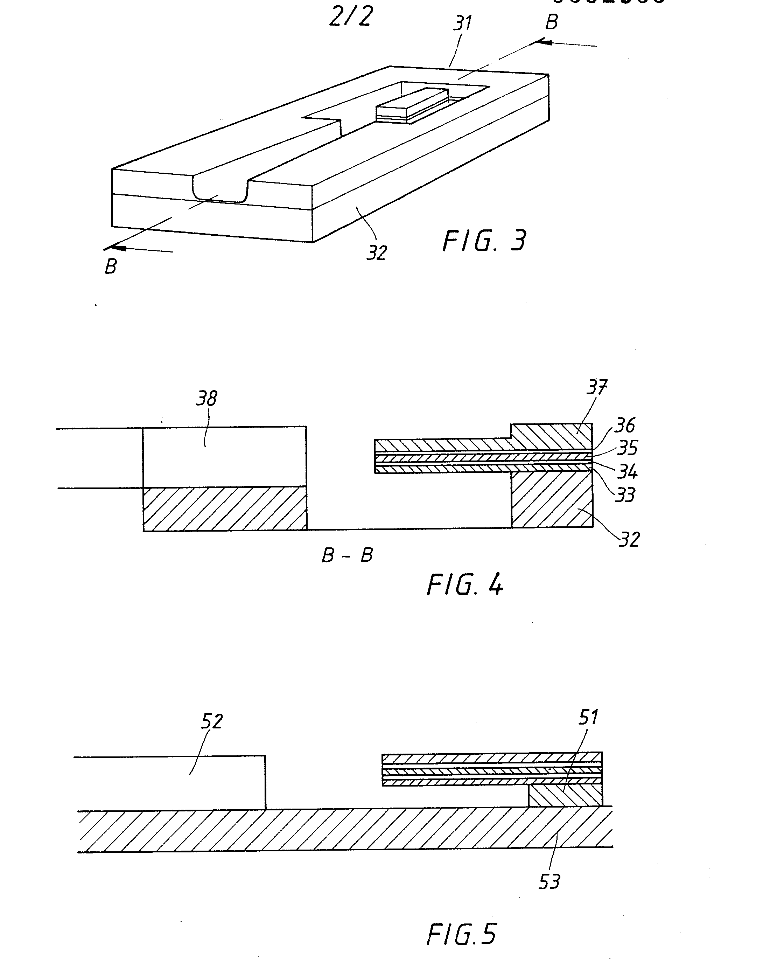

Eine andere Ausführungsform der Sensorstruktur zeigen die Figuren 3 und 4. Hier ist der elastische Teil als einseitig eingespannter Träger 31 (Freiträger) ausgebildet, der zwei Volumina mit unterschiedlichen Fotolumineszenzeigenschaften enthält. 32 ist ein Substrat, beispielsweise GaAs, auf dem Epitaxialschichten 33, 34, 35, 36, 37 aus $Al_xGa_{1-x}As$ aufgebracht sind. 38 ist eine optische Faser oder alternativ eine Wellenleiterstruktur aus AlGaAs, die in integrierter Form mit dem Substrat hergestellt werden kann. Die lumineszierenden Schichten 34 und 36 sind vorzugsweise sehr dünn ausgebildet, damit sich das Licht in ihnen nur in einer kleinen Anzahl von Moden ausbreitet. Zweckmäßigerweise werden diese Schichten auch so ausgebildet, daß das Lumineszenzlicht in einem Wellenlängenbereich liegt, in dem das Material einen niedrigen Absorptionskoeffizienten hat. Dies kann durch kräftige Dotierung des Materials (AlGaAs) mit beispielsweise Si oder Ge erreicht werden. Auch eine Dotierung mit Substanzen, die tiefer liegende Störniveaus bewirken, wie beispielsweise Mn in GaAs, bringt diese Wirkung zustande.

Eine weitere Ausführungsform zeigt Figur 5. Hier sind die monolithische Struktur 51 und die optische Faser 52 auf einem Trägermaterial 53, beispielsweise Glas oder Si, befestigt.

Die vorstehend beschriebenen Sensoranordnungen können im Rahmen des offenbarten allgemeinen Erfindungsgedankens in vielfacher Weise variiert werden.

Patentanwalt und Rechtsanwalt
Dr.-Ing. Dipl.-Ing. Joachim B o e c k e r

6 Frankfurt/Main 1 , 5.4.1983
Rathenauplatz 2-8
Telefon: (0611) *282355
Telex: 4189 066 itax d

0092505

B/th 21 257 PE

- 5 -

## Patentansprüche

1. Faseroptischer Geber mit mindestens einem optischen Wellenleiter, z.B. einer optischen Faser, der Licht zum Sensor des Gebers hin und von diesem wegleitet, wobei der Sensor eine Struktur mit lumineszierendem Material enthält, dadurch gekennzeichnet, daß der Sensor aus einer monolithischen Struktur besteht, die mindestens zwei lumineszierende Materialvolumina (14, 15; 34, 36) mit unterschiedlichen Lumineszenzspektren enthält, daß die genannten Materialvolumina getragen werden von einem elastischen Teil in Form einer Membran (13), eines eingespannten Trägers (Fig. 4) oder eines membranähnlichen Teils und daß der Wellenleiter (10, 52) im Verhältnis zum elastisch gelagerten Sensorteil derart angeordnet ist, daß das dem Wellenleiter zugeführte Lumineszenzlicht von der Durchbiegung des elastischen Teils abhängig ist.

2. Faseroptischer Geber nach Anspruch 1, dadurch gekennzeichnet, daß in dem elastisch eingespannten Träger zwei Materialvolumina mit unterschiedlichen Luminesspektren enthalten sind, die solche geometrischen Abmessungen haben, daß eine Ausbreitung von Licht in ihnen in höchstens zehn verschiedenen Moden möglich ist.

3. Faseroptischer Geber nach einem der vorhergehenden Ansprüche, dadurch gekennzeichnet, daß die monolithische Struktur (11, 14, 15) zusammen mit einem im wesentlichen ebenen Deckmaterial (16) zwei fluide oder gasförmige Medien trennt.

4. Faseroptischer Geber nach einem der vorhergehenden Ansprüche, dadurch gekennzeichnet, daß die monolithische Struktur mindestens einen Wellenleiter (38) enthält.

/6

5. Faseroptischer Geber nach einem der vorhergehenden Ansprüche, dadurch gekennzeichnet, daß die monolithische Struktur (11) ganz oder teilweise aus Halbleitermaterialschichten besteht.

6. Faseroptischer Geber nach Anspruch 5, dadurch gekennzeichnet, daß die Struktur aus $Al_xGa_{1-x}As$-Schichten mit $0 \leq X \leq 1$ in den einzelnen Schichten besteht.

7. Faseroptischer Geber nach Anspruch 5, dadurch gekennzeichnet, daß die Struktur aus $In_xGa_{1-x}As_yP_{1-y}$-Schichten oder $In_xGa_{1-x}As$-Schichten besteht.

0092505

5.4.1982
21 257 PE

FIG. 1

FIG. 2

0092505

FIG. 3

B – B

FIG. 4

FIG.5

0092505

## EUROPÄISCHER RECHERCHENBERICHT

| EINSCHLÄGIGE DOKUMENTE | | | EP 83710017.1 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| D,X | DE - A1 - 3 047 343 (ASEA AB)<br>   * Ansprüche 1,10; Fig. 4,5 *<br>-- | 1,2 | G 01 D 5/26<br>G 01 L 1/24<br>G 02 F 1/29 |
| A | DE - A1 - 3 101 047 (ASEA AB)<br>   * Ansprüche 1-3 *<br>-- | | |
| A | GB - A - 2 034 460 (ASEA AB)<br>   * Zusammenfassung *<br>-- | | |
| A | US - A - 4 158 310 (HO)<br>   * Zusammenfassung; Fig. 3,4 *<br>-- | | |
| A | DE - A1 - 2 657 119 (PLESSEY)<br>   * Anspruch 1; Fig. 1A,1B,2 *<br>-- | | RECHERCHIERTE SACHGEBIETE (Int. Cl. ³) |
| A | EP - A2 - 0 025 565 (SIEMENS)<br>   * Zusammenfassung; Fig. 4 *<br>---- | | G 01 D 5/00<br>G 01 L 1/00<br>G 01 L 11/00<br>G 02 B 5/00<br>G 02 F 1/00 |

Der vorliegende Recherchenbericht wurde für alle Patentansprüche erstellt.

| Recherchenort | Abschlußdatum der Recherche | Prüfer |
|---|---|---|
| WIEN | 13-07-1983 | KUNZE |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82